# EUROPÄISCHE PATENTANMELDUNG

(11) **EP 1 403 578 A1**
(43) Veröffentlichungstag der Anmeldung: **31.03.2004**
(21) Anmeldenummer: 03019697.6
(22) Anmeldetag: 10.09.2003
(51) Int. Cl.: F16L 59/065, F16L 59/06, F16L 59/15, F16L 9/12

(54) **Fernwärmeleitungsrohr**

(30) Priorität: 30.09.2002 DE 20215046 U
(71) Anmelder: Fränkische Rohrwerke Gebr. Kirchner GmbH + Co KG, 97486 Königsberg/Bayern (DE)
(72) Erfinder: BESCHORNER, Michael, 99195 Markvippach (DE); MÜLLER, Carsten, 36115 Hilders (DE)
(74) Vertreter: Schwabe - Sandmair - Marx

(57) **Zusammenfassung**

Die Erfindung betrifft ein Fernwärmeleitungsrohr zur Leitung eines Wärmeträgermediums mit den folgenden Merkmalen: einer inneren Schicht (14) zur Leitung eines Wärmeträgermediums, die einen inneren freien Leitungsquerschnitt (18) bereitstellt; einer Schicht (16) zur Dämmung des Wärmeträgermediums gegenüber der Umgebung, die die innere Schicht (14) umgibt; einer äußeren Schutzschicht (12), die die Dämmschicht (16) umgibt; wobei die Dämmschicht (16) einen Unterdruckbereich bzw. Vakuumbereich aufweist, der die innere Schicht umgibt.

## Beschreibung

Die Erfindung betrifft ein Fernwärmeleitungsrohr bzw. Fernwärmeleitungshohlstränge mit einer inneren Schicht zur Leitung eines Wärmeträgermediums, einer Schicht zur Dämmung des Wärmeträgermediums gegenüber der Umgebung, wobei die Dämmschicht die innere Schicht umgibt, und einer äußeren Schutzschicht, die die Dämmschicht umgibt, gemäß dem Oberbegriff des Anspruchs 1.

Zur Erreichung der Klimaschutzziele der Industriestaaten (Kyoto-Abkommen 12/1977, CO2 Reduktionen) ist der Einsatz von dezentralen Wärmeerzeugungsanlagen in der heutigen Zeit nötig.

Der Treibhausgasminderungsverpflichtung nachkommend ist ein Einsatz von Nah-Fernwärme in einem liberalisierten Energiemarkt unter besonderer Berücksichtigung der Kraft-Wärme-Kopplung und regenerativen Energien erstrebenswert.

Im Stand der Technik sind dementsprechend gattungsgemäße Fernwärmeleitungsrohre bekannt, wobei diese mit einer Dämmschicht mit einer ganz erheblichen Dicke umgeben werden muss, um keine übermäßigen Wärmeverluste für das Wärmeträgermedium in Kauf nehmen zu müssen, das durch die bekannten Fernwärmeleitungsrohre hindurchgeleitet wird.

Abgesehen von dem großen Materialaufwand, der zu beachtlichen Kosten führt, und der schwierigen Verarbeitbarkeit von Rohren mit daraus resultierendem großen Durchmesser, sind solche Rohre auch sehr steif und erfordern besondere Vorsicht beim Einbau. Auch können solche Rohre bzw. deren Dämmschicht brechen, wenn der Boden in der Umgebung des bekannten Fernwärmeleitungsrohres beim Einbau verdichtet wird oder sich später setzt. Das Resultat sind Wärmeverluste bzw. kostspielige nachträgliche Baumaßnahmen, Reparaturmaßnahmen, und dgl.

Es ist die Aufgabe gemäß der vorliegenden Erfindung, ein Fernwärmeleitungsrohr zur Verfügung zu stellen, das die oben aufgezeigten Nachteile des Standes der Technik wenigstens teilweise auszuräumen vermag. Insbesondere soll ein Fernwärmeleitungsrohr zur Verfügung gestellt werden, dessen Durchmesser wesentlich kleiner ist, wobei gleichzeitig die gleiche Menge an Wärmeträgermedium geleitet werden kann und Wärmeverluste in keinem nennenswerten Maße auftreten.

Die gemäß der Erfindung zu lösende Aufgabe wird mit einem Fernwärmeleitungsrohr bewältigt, bei dem die Dämmschicht einen Unterdruckbereich bzw. einen Vakuumbereich aufweist, der die innere Schicht umgibt. Als Dämmmaterial können dabei auch nachwachsende Rohstoffe, wie etwa Flachs, in Betracht.

Durch die Einrichtung eines Unterdruckbereiches bzw. Vakuumbereiches ist es möglich, eine Dämmung zur Verfügung zu stellen, die zum Einen relativ dünn ist und zum Anderen kann durch diese dünne Schicht eine bisher nicht gekannte Flexibilität bei Fernwärmeleitungsrohren ermöglicht werden. Der Unterdruckbereich bzw. Vakuumbereich kann vergleichsweise dünn ausgebildet sein und weist dennoch herausragende Dämmeigenschaften auf.

Vorteilhafterweise umfasst die Dämmschicht ein Dämmmaterial, das aus miteinander verbundenen und/oder nicht verbundenen Materialteilchen besteht, die evakuierbare Abstände zwischen einander ergeben. Dabei kann das Dämmmaterial z.B. aus einem Pulver, einem Granulat, künstlichen Fasern oder dgl. bestehen. Das Pulver oder Granulat kann etwa ein Kunststoffpulver bzw. -granulat oder ein keramisches Pulver bzw. Granulat sein, so dass das Material an sich bereits gute Dämmeigenschaften hat. Die Abstände bzw. Hohlräume zwischen diesen Materialteilchen können dann evakuiert werden, um den nötigen Unterdruckbereich bzw. Vakuumbereich in einer stabilen Form bereitstellen zu können. Es gibt dann lediglich zwischen den Materialteilchen kleine Verbindungsstellen, die für die Aufrechterhaltung der mechanischen Stabilität erforderlich sind. Diese Verbindungsstellen sind dann die einzigen Wärmebrücken, über die dem Wärmeträgermedium Wärme entzogen werden kann. Auf diese Weise lässt sich einerseits eine hohe Flexibilität und andererseits eine außergewöhnlich gute Wärmedämmung bewerkstelligen.

Vorteilhafterweise wird eine zusätzliche wärmereflektierende Schicht vorgesehen, die die innere Schicht oder die Dämmschicht umgibt. Die reflektierende Schicht kann Wärmestrahlung zurückwerfen, bevor sie die Dämmschicht erreicht oder nachdem sie die Dämmschicht überwunden hat.

Das erfmdungsgemäße gedämmte Fernwärmeleitungsrohr, insbesondere Fernwärmeleitungshohlstränge, kann unterschiedlichste Querschnittsformen aufweisen. Abweichend von einem kreisförmigen Querschnitt kann der Querschnitt durch in etwa dreieckig, viereckig, im Wesentlichen rechtwinklig, oval, usw. sein.

Andererseits oder zusätzlich ist es auch möglich, dem Dämmmaterial Zusätze von Infrarottrübungsmitteln zuzugeben, um die Wärmeleitfähigkeit zur Förderung der Wärmedämmeigenschaften zu beeinflussen. Derartige Trübungsmittel sind im Stand der Technik bekannt und brauchen hier nicht näher erwähnt zu werden.

Besonders vorteilhaft ist es, wenn das Dämmmaterial ein mineralisches Material, etwa Kieselsäure, hergestellt als kyrogene Kieselsäure durch die Verbrennung von Silanen, ist. Hieraus ergeben sich dann hochporöse Pulverkörper, die für eine Dämmschicht eines erfindungsgemäßen Fernwärmeleitungsrohres eingesetzt werden können. Es ist auch möglich, Glasfasern, offenporige Schäume, etwa und andere Pulver- oder Granulatmaterialien einzusetzen. Als Dämmmaterial können vorteilhaft auch nachwachsende Rohstoffe, etwa Flachs, Verwendung finden.

Vorteilhafterweise ist die Dämmschicht mit zwei fluiddichten Lagen versehen, die das Dämmmaterial zwischen sich einschließen, um einerseits die Aufrechterhaltung des Unterdrucks bzw. des Vakuums zu sichern und andererseits ein Hindurchtreten des Trägermediums für die Wärme verhindern zu können. Hier sind gasdichte Lagen besonders vorteilhaft, die einerseits stabil sind und andererseits auch über eine lange Zeit eine Gasundurchlässigkeit garantieren können, um den nötigen Unterdruck in der Dämmschicht aufrechterhalten zu können.

Vorteilhafterweise kann die innere Schicht des erfindungsgemäßen Fernwärmeleitungsrohres den Aufbau eines Mehrschichtverbundrohres aufweisen, etwa eine innere Kunststoffschicht, ggf. eine diese umgebende Metallschicht, etwa eine Aluminiumschicht, und eine die Metallschicht umgebende Kunststoffschicht. Es ist auch möglich, in vorteilhafter Weise eine einschichtige Kunststoffschicht einzusetzen.

Vorteilhafterweise können die inneren Schichten über eine PE-Vernetzung besonders undurchlässig gemacht werden. Insbesondere ist die Sauerstoffundurchlässigkeit aufgrund der Vernetzung hervorzuheben. Dementsprechend ist als eine innere Schicht eine PE-X-Schicht sehr zu bevorzugen, insbesondere eine PE-Xa- und/oder eine PE-Xb-Schicht. Die PE-Xa-Schicht bezeichnet eine PE-Schicht, die peroxidisch vernetzt ist, während die PE-Xb-Schicht silanvernetzt ist.

Andererseits kann auch eine physikalische Vernetzung stattfinden, beispielsweise über eine Elektronenstrahlvernetzung, womit sich dann eine PE-Xc-Schicht ergibt.

Besonders vorteilhaft kann die Flexibilität des erfmdungsgemäßen Fernwärmeleitungsrohres begünstigt werden, wenn die äußere Schutzschicht als Wellrohr ausgebildet ist. Das Wellrohr kann beispielsweise auch aus PE-H oder PE-Xb + PP sein. Ferner lässt sich hierdurch die Stabilität des erfindungsgemäßen Rohres ganz erheblich steigern, was ganz besonders im Hinblick auf hohe Belastungen von Vorteil ist, die beim Einbau und auch im Betrieb durch das umgebende Erdmaterial hervorgerufen werden.

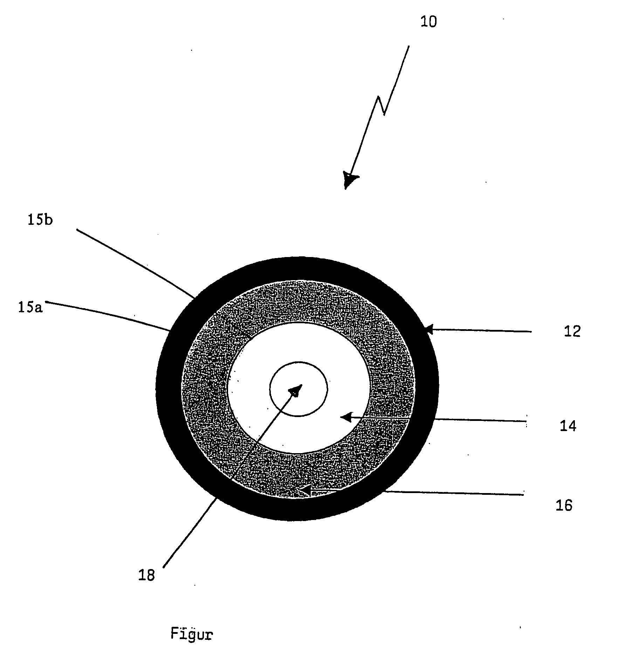

Nachfolgend wird die vorliegende Erfindung anhand einer bevorzugten Ausführungsform unter Bezugnahme auf die einzige Figur näher erläutert. Dabei werden weitere Vorzüge, Zielsetzungen und Merkmale gemäß der Erfindung offenbart.

Die Figur zeigt einen Querschnitt durch eine Ausführungsform eines Fernwärmeleitungsrohres mit Merkmalen gemäß der Erfindung. Ein innerer freier Leitungsquerschnitt 18 ist vorgesehen, um ein Wärmeträgermedium führen zu können.

Der innere freie Leitungsquerschnitt 18 wird nach außen durch eine innere Schicht 14 beschränkt, wobei diese innere Schicht aus Kunststoff bestehen kann oder selbst aus mehreren Schichten gebildet sein kann. Insofern mehrere Schichten vorgesehen sind, können diese in der Form eines Verbundrohres, etwa in der Form eines Kunststoff-Metall-Kunststoff-Verbundrohres vorgesehen sein.

Der Kunststoff kann mittels einer Vernetzungstechnologie besonderes fluiddicht ausgebildet sein. Ggf. kann auch zur Förderung der Flexibilität die innere Schicht 14 als Wellrohr ausgebildet sein.

Die innere Schicht 14 wird durch die erfindungsgemäß vorgesehen Dämmschicht 16 umgeben, die ein Material aufweist, das porös ist bzw. das Hohlräume ermöglicht, die evakuierbar sind, um eine möglichst geringe Wärmeleitung bereitstellen zu können. Als Materialien, aus denen das Dämmmaterial hergestellt werden kann, lassen sich insbesondere Glasfasern, offenporige Schäume, verpresste Pulverplatten, pyrogene, mikroporöse Kieselsäure, und dgl. mehr verwenden.

Zwar können auch die innere Schicht 14 und eine die Dämmschicht 16 umgebende äußere Schicht bzw. Schutzschicht 12 verwendet werden, um ein Vakuum bzw. einen Unterdruck in der Dämmschicht 16 aufzubauen, jedoch wird es bevorzugt, wenn die Dämmschicht 16 ihre eigenen, gasundurchlässigen Grenzlagen aufweist, die, nachdem das Vakuum innerhalb der Dämmschicht erzeugt worden ist, verklebt, verschweißt oder sonst wie abgedichtet werden können, um das Vakuum innerhalb der Dämmschicht 16 sicherstellen zu können. Vorteilhafterweise kann die Dämmschicht 16 auch zusätzlich radial außen mit einer Metallschicht bzw. Metallfolienschicht 15a etwa einer Aluminiumschicht, umgeben sein. Die Aluminiumschicht kann etwa in der Form einer Folie 15a, die um die Dämmung 16 gelegt und verschweißt wird, vorgesehen sein. Auch kann eine entsprechende Schicht bzw. Folie 15b zwischen den Schichten 14 und 16 angeordnet werden. Das Eindringen von Wasserdampf insbesondere in die Dämmung 16 kann durch solcherlei Maßnahmen verhindert werden. Gemäß einer bevorzugten Ausführungsform kann das Dämmmaterial aus einem Flachsfaser-Gewebe bestehen, dass der Wärmeleitfähigkeitsgruppe 040 zugeordnet ist.

Der Energieaufwand zur Herstellung von Flachsfasern ist im Vergleich zu herkömmlichen Dämmstoffen außerordentlichen niedrig, dadurch schonen wird die Umwelt und unsere Ressourcen.

Das Mediumrohr kann einen Durchmesser von etwa 20 - 63 mm bis 110 mm haben und sollte absolute Dichtheit gegen Sauerstoffeintritt und Wasserdampfaustritt bieten.

Das Mantelrohr 12 aus einem vernetzten PE ist äußerst widerstandsfähig und wird mit dem rauen Baustellenalltag sehr gut fertig. Die US-Beständigkeit ist > 10 Jahre.

Die äußere Schutzschicht 12 kann sowohl in der Form eines Glattrohres als auch in der Form eines Wellrohres vorgesehen sein, wobei es bevorzugt ist, die Schutzschicht in der Form eines Wellrohres 12 anzuordnen.

## Patentansprüche

1. Fernwärmeleitungsrohr zur Leitung eines Wärmeträgermediums mit den folgenden Merkmalen:
a) einer inneren Schicht (14) zur Leitung eines Wärmeträgermediums, die einen inneren freien Leitungsquerschnitt (18) bereitstellt;
b) einer Schicht (16) zur Dämmung des Wärmeträgermediums gegenüber der Umgebung, die die innere Schicht (14) umgibt;
c) einer äußeren Schutzschicht (12), die die Dämmschicht (16) umgibt; wobei
d) die Dämmschicht (16) einen Unterdruckbereich bzw. Vakuumbereich aufweist, der die innere Schicht umgibt.

2. Fernwärmeleitungsrohr nach Anspruch 1, wobei die Dämmschicht ein Dämmmaterial aufweist, das aus verbundenen und/oder nicht verbundenen Materialteilchen besteht, die evakuierbare Abstände zwischen einander ergeben.

3. Fernwärmeleitungsrohr nach Anspruch 2, wobei das Dämmmaterial ein Pulver, Granulat, Fasermaterial oder dgl. umfasst.

4. Fernwärmeleitungsrohr nach einem der Ansprüche 2 oder 3, wobei das Dämmmaterial einen geringen Wärmeleitwert bzw. einen hohen Wärmeleitwiderstand aufweist.

5. Fernwärmeleitungsrohr nach einem der Ansprüche 1 bis 4, wobei einen zusätzliche, wärmereflektierende Schicht vorgesehen ist, die die innere Schicht (14) oder die Dämmschicht (16) umgibt, etwa eine Aluminiumschicht.

6. Fernwärmeleitungsrohr nach einem der Ansprüche 2 bis 5, wobei das Dämmmaterial ein mineralisches Material ist, etwa Kieselsäure, oder ein Kunststoffmaterial.

7. Fernwärmeleitungsrohr nach einem der Ansprüche 2 bis 6, wobei das Dämmmaterial ein die Flexibilität verbesserndes Material, etwa Zellulosefasern, umfasst.

8. Fernwärmeleitungsrohr nach einem der Ansprüche 2 bis 7, wobei das Dämmmaterial eine Infrarotstrahlung blockierende Komponente enthält.

9. Fernwärmeleitungsrohr nach einem der Ansprüche 2 bis 8, wobei die Dämmschicht zwei fluiddichte Lagen aufweist, die das Dämmmaterial zwischen einander einschließen.

10. Fernwärmeleitungsrohr nach einem der Ansprüche 1 bis 9, wobei die innere Schicht (14) den Aufbau eines Mehrschichtverbundrohres aufweist, etwa mit einer inneren Kunststoffschicht, ggf. einer diese umgebende Metallschicht, etwa eine Aluminiumschicht bzw. -folie, und ggf. einer die Metallschicht umgebenden Kunststoffschicht.

11. Fernwärmeleitungsrohr nach einem der Ansprüche 1 bis 9, wobei die innere Schicht (14) eine PE-X-Schicht aufweist, insbesondere eine PE-Xa- und/oder eine PE-Xbund/oder eine PE-Xc-Schicht.

12. Fernwärmeleitungsrohr nach einem der Ansprüche 1 bis 11, wobei die äußere Schutzschicht ein Wellrohr ist.

13. Fernwärmeleitungsrohr nach einem der Ansprüche 1 bis 12, wobei die innere Schicht als Wellrohr ausgebildet ist.

14. Fernwärmeleitungsrohr nach einem der Ansprüche 1 bis 13, wobei die Schicht (16) zur Dämmung wenigstens einseitig mit einem Metallmantel, insbesondere einer Aluminiumfolie (15a, 15b) umgeben ist.

15. Fernwärmeleitungsrohr nach einem der Ansprüche 1 bis 14, wobei das Dämmmaterial der Dämmschicht Naturfasern, etwa Flachsfasern, enthält.
